# EUROPEAN PATENT APPLICATION

(11) **EP 4 566 817 A1**
(43) Date of publication of application: **11.06.2025**
(21) Application number: 23850053.2
(22) Date of filing: 31.07.2023
(51) Int. Cl.: B32B 27/40, B32B 27/20

(54) **LAYERED BODY AND PAPER PRODUCT OBTAINED USING SAME**

(30) Priority: 01.08.2022 JP 2022122965
(71) Applicant: Oji Holdings Corporation, Chuo-ku Tokyo 104-0061 (JP)
(72) Inventor: NOISHIKI, Yasutomo, Tokyo 104-0061 (JP); SHAMOTO, Yuta, Tokyo 104-0061 (JP); NAMIOKA, Moeka, Tokyo 104-0061 (JP); WAKABAYASHI, Misaki, Tokyo 104-0061 (JP)
(74) Representative: Jones, Nicholas Andrew
(86) International application number: PCT/JP2023/027996
(87) International publication number: WO 2024/029499

(57) **Abstract**

This layered body has both high steam-barrier properties and gas-barrier properties and further enables an increase in the paper percentage (biomass percentage). This layered body is provided with, in this order, a paper substrate layer, a barrier layer, and a sealant layer. The barrier layer contains a polyurethane resin, a flat inorganic compound having an average thickness of 50 nm or thinner and an average aspect ratio of 200 or greater, and a cationic resin. The sealant layer contains wax.

## Description

### TECHNICAL FIELD

The present disclosure relates to a laminate having barrier properties, and a paper product using the laminate.

### BACKGROUND ART

Packaging materials produced by imparting gas barrier properties such as oxygen barrier properties and/or imparting water vapor barrier properties to paper substrates have been conventionally used for the packaging of food, medical supplies, electronic components and the like, for example, in order to prevent a decrease in the quality of the contents.

To impart water vapor barrier properties and/or gas barrier properties to a paper substrate, a method of laminating a synthetic resin film having excellent gas barrier properties or the like to a paper substrate is generally used. However, in a material in which a synthetic resin film or the like is laminated on a paper substrate, it is difficult to recycle the paper, the synthetic resin and the like after use, causing an environmental problem.

Therefore, the development of a material having gas barrier properties which is produced using a paper as a substrate, without using a synthetic resin film or the like, is underway. For example, JP 2021-138434 A discloses a technique for controlling hydroxyl groups and acid groups in a resin to be used in a gas barrier layer, in a paper barrier material in which the gas barrier layer and a heat seal layer are provided on a paper substrate in the order mentioned.

### SUMMARY OF THE INVENTION

In the paper barrier material disclosed in JP 2021-138434 A, the barrier layer is a single layer, and it is possible to decrease the amount of plastic material. However, this is not sufficient from the viewpoints of achieving higher gas barrier properties and obtaining both the gas barrier properties and the water vapor barrier properties.

The present disclosure provides a laminate capable of achieving both high water vapor barrier properties and gas barrier properties, and further, improving the paper ratio (biomass ratio).

The present disclosure relates to the following <1> to <18>.
<1> A laminate including a paper substrate layer, a barrier layer and a sealant layer, in the order mentioned,
   wherein the barrier layer contains:
      a polyurethane resin;
      a flat inorganic compound having an average thickness of 50 nm or less and an average aspect ratio of 200 or more; and
      a cationic resin, and
   wherein the sealant layer contains a wax.
<2> The laminate according to <1>, wherein the polyurethane resin includes at least one selected from the group consisting of:
   a polyurethane containing a structural unit derived from metaxylylene diisocyanate; and
   hydroxypolyurethane.
<3> The laminate according to <1> or <2>, wherein the flat inorganic compound includes a swellable layered silicate.
<4> The laminate according to any one of <1> to <3>, wherein the barrier layer contains from 1.0 to 20.0% by mass of the cationic resin.
<5> The laminate according to any one of <1> to <4>, wherein the barrier layer contains from 30.0 to 80.0% by mass of the polyurethane resin.
<6> The laminate according to any one of <1> to <5>, wherein the barrier layer contains from 5.0 to 35.0% by mass of the flat inorganic compound.
<7> The laminate according to any one of <1> to <6>,
   wherein the barrier layer further contains at least one selected from the group consisting of a water-suspendable polymer other than the polyurethane resin and a water-soluble polymer other than the polyurethane resin,
   wherein the water-suspendable polymer includes at least one selected from the group consisting of a styrene-butadiene-based copolymer, a styrene-acrylic copolymer, an olefin-unsaturated carboxylic acid-based copolymer, and a polyolefin resin, and
   wherein the water-soluble polymer includes at least one selected from the group consisting of a vinyl alcohol-based polymer and a (meth)acrylic acid-based polymer.
<8> The laminate according to any one of <1> to <6>,
   wherein the barrier layer further contains at least one of a water-suspendable polymer other than the polyurethane resin and a water-soluble polymer other than the polyurethane resin, and
   wherein the barrier layer contains the water-suspendable polymer and the water-soluble polymer, at least in any one of the following combinations (A) to (E):
      (A) an ethylene-acrylic acid copolymer as the water-suspendable polymer, and polyvinyl alcohol as the water-soluble polymer;
      (B) an ethylene-acrylic acid copolymer as the water-suspendable polymer, and polyacrylic acid as the water-soluble polymer;
      (C) a styrene-acrylic copolymer as the water-suspendable polymer, and polyvinyl alcohol as the water-soluble polymer;
      (D) a styrene-butadiene-based copolymer as the water-suspendable polymer, and polyvinyl alcohol as the water-soluble polymer; and
      (E) a polyolefin resin as the water-suspendable polymer, and polyvinyl alcohol as the water-soluble polymer.
<9> The laminate according to <7> or <8>, wherein the barrier layer contains a total of from 1.0 to 50.0% by mass of the water-suspendable polymer other than the polyurethane resin and the water-soluble polymer other than the polyurethane resin.
<10> The laminate according to any one of <7> to <9>, wherein the ratio (the mass of the polyurethane resin: the total mass of the water-suspendable polymer and the water-soluble polymer) of the mass of the polyurethane resin and the total mass of the water-suspendable polymer other than the polyurethane resin and the water-soluble polymer other than the polyurethane resin, in the barrier layer, is from 50:50 to 95:5.
<11> The laminate according to any one of <1> to <10>, wherein the sealant layer contains a water-dispersible resin.
<12> The laminate according to any one of <1> to <11>, wherein the wax includes at least one selected from the group consisting of a hydrocarbon wax and an ester wax.
<13> The laminate according to any one of <1> to <12>, wherein the wax includes at least one selected from the group consisting of a paraffin wax, a carnauba wax, and a microcrystalline wax.
<14> The laminate according to any one of <1> to <13>,
   wherein the sealant layer contains a water-dispersible resin, and
   wherein the water-dispersible resin includes at least one selected from the group consisting of a styrene-acrylic copolymer and a polyolefin resin.
<15> The laminate according to any one of <1> to <14>,
   wherein the sealant layer contains a water-dispersible resin, and
   wherein the sealant layer contains the water-dispersible resin and the wax, at least in any one of the following combinations (A) to (D):
      (A) a styrene-acrylic copolymer as the water-dispersible resin, and a paraffin wax as the wax;
      (B) a styrene-acrylic copolymer as the water-dispersible resin, and a carnauba wax as the wax;
      (C) a styrene-acrylic copolymer as the water-dispersible resin, and a microcrystalline wax as the wax; and
      (D) a polyolefin resin as the water-dispersible resin, and a paraffin wax as the wax.
<16> The laminate according to any one of <1> to <15>,
   wherein the sealant layer contains a water-dispersible resin, and
   wherein the content of the wax in the sealant layer is from 1 to 35 parts by mass with respect to 100 parts by mass of the water-dispersible resin.
<17> The laminate according to any one of <1> to <16>, wherein the content of the wax in the sealant layer is from 1 to 30% by mass.
<18> A paper product using the laminate according to any one of <1> to <17>.

### MODE FOR CARRYING OUT THE INVENTION

In the present specification, the expression "from X to Y" used to indicate a range means "X or more and Y or less". When numerical ranges are described in stages, the upper limit and the lower limit of each numerical range can be combined arbitrarily. In the present specification, the term "gas barrier properties" refers to "oxygen barrier properties" unless otherwise specified. In the present specification, the term "(meth)acrylic" is a generic term referring to both "acrylic" and "methacrylic". Further, in the present specification, operations and the measurements of physical properties and the like are carried out under the conditions of room temperature (from 20 to 25°C) and a relative humidity of from 40 to 50% RH, unless otherwise specified.

One embodiment of the present disclosure relates to a laminate including a paper substrate layer, a barrier layer and a sealant layer, in the order mentioned,
wherein the barrier layer contains:
   a polyurethane resin;
   a flat inorganic compound having an average thickness of 50 nm or less and an average aspect ratio of 200 or more; and
   a cationic resin, and
wherein the sealant layer contains a wax.
In this laminate, it is possible to achieve both high water vapor barrier properties and gas barrier properties, and further, to improve the paper ratio (biomass ratio). The mechanisms that allow for the above-described effects are not known, but are assumed to be as follows.

The barrier layer contains a polyurethane resin, a flat inorganic compound having an average thickness of 50 nm or less and an average aspect ratio of 200 or more, and a cationic resin. The present inventors consider that, when the barrier layer contains the above-described materials, particularly, when the flat inorganic compound having the above-described properties and a cationic resin are used in combination in the layer, the maze effect provided by the flat inorganic compound, which is described later, can be effectively obtained, making it possible to achieve high water vapor barrier properties and gas barrier properties.

Further, when the sealant layer contains a wax, excellent water vapor barrier properties can be achieved. The present inventors consider that such an effect is due to the film-forming effect provided by the wax. Specifically, it is thought that the wax floats up to the surface of the sealant layer during coating, melts by heat to form a film, and covers the surface of the sealant layer, thereby allowing excellent water vapor barrier properties to be achieved.

The combination of these specific barrier layer and sealant layer makes it possible to achieve both high water vapor barrier properties and gas barrier properties. In addition, since the laminate described above is capable of achieving higher water vapor barrier properties and gas barrier properties, it is possible to drastically reduce the amount of film used and to improve the paper ratio (biomass ratio), as compared to a conventional laminate having barrier properties.

It is noted that the effects of the present invention are not limited to the mechanisms described above.

The laminate according to the present embodiment may have the barrier layer and the heat seal layer in the order mentioned, only on one surface of the paper substrate layer, or alternatively, may have the barrier layer and the heat seal layer in the order mentioned, on each of both surfaces of the paper substrate layer.

The respective configurations of the laminate will be described below.

### < Paper Substrate Layer >

The laminate includes the paper substrate layer. The paper substrate to be used as the paper substrate layer is not particularly limited, and a known paper material can be used.

The pulp constituting the paper substrate preferably contains plant-derived pulp as a main component, and contains wood pulp as a main component. Examples of the wood pulp include hardwood pulp and softwood pulp. Examples of non-wood pulp include cotton pulp, hemp pulp, Kenaf pulp and bamboo pulp. The paper substrate may contain, as a subordinate paper material, a material other than pulp such as synthetic fibers, for example, rayon fibers or Nylon fibers, as long as the effects of the present invention are not impaired.

Specific examples of the paper substrate include bleached kraft papers, unbleached kraft papers, wood-free papers, paperboards, liner papers, coated papers, one side-glazed bleached kraft papers, glassine papers and graphene papers. Among these, the paper substrate is preferably a bleached kraft paper, an unbleached kraft paper, a wood-free paper, or a one side-glazed bleached kraft paper. The paper substrate is more preferably a bleached kraft paper or a one side-glazed bleached paper, and still more preferably a one side-glazed bleached kraft paper.

The paper substrate may contain an additive. Examples of the additive include a pH modifier (such as sodium hydrogen carbonate and sodium hydroxide), a dry strengthening agent (such as polyacrylamide and starch), a wet strengthening agent (any of a polyamide-polyamine-epichlorohydrin resin, a melamine-formaldehyde resin and a urea-formaldehyde resin), an internal sizing agent (such as a rosin-based agent and an alkyl ketene dimer), a drainage/retention aid, an antifoaming agent, a filler (such as calcium carbonate and talc) and a dye. These additives may be used singly, or in combination of two or more kinds thereof. The content of the additive is not particularly limited, and may be within the range usually used.

### (Basis Weight)

The basis weight of the paper substrate is not particularly limited, and can be selected as appropriate, depending on the purpose of use of the laminate. In the case of a packaging bag application, for example, the basis weight of the paper substrate is preferably 20 g/m² or more and 150 g/m² or less, more preferably 30 g/m² or more and 100 g/m² or less, and still more preferably 40 g/m² or more and 70 g/m² or less. The basis weight of the paper substrate is measured in accordance with JIS P 8124: 2011.

### (Paper Thickness)

The paper thickness of the paper substrate is not particularly limited, and can be selected as appropriate, depending on the purpose of use of the laminate. In the case of a packaging bag application, for example, the paper thickness of the paper substrate is preferably 20 µm or more and 150 µm or less, more preferably 25 µm or more and 100 µm or less, and still more preferably 30 µm or more and 50 µm or less. The paper thickness of the paper substrate is measured in accordance with JIS P 8118: 2014.

### (Oken Smoothness)

The smoothness of the paper substrate is not particularly limited. For example, the Oken smoothness of the surface to be provided with the barrier layer is preferably 5 seconds or more, and more preferably 10 seconds or more. The upper limit of the Oken smoothness is not particularly limited. For example, the upper limit is preferably 2000 seconds or less, and more preferably 1000 seconds or less. The Oken smoothness of the paper substrate is measured in accordance with JIS P 8155: 2010.

### (Method of Producing Paper Substrate)

The paper substrate can be produced, for example, by a method of papermaking using a paper material containing pulp. The paper material may further contain an additive. Examples of the additive include additives exemplified above.

The paper material can be prepared by adding an additive(s) to a pulp slurry. The pulp slurry can be obtained by beating pulp in the presence of water. The method of beating pulp and the beating apparatus to be used are not particularly limited, and may be the same as a known beating method and beating apparatus. The content of the pulp in the paper material is not particularly limited, and may be within the range usually used. For example, the content of the pulp is 60% by mass or more and less than 100% by mass, with respect to the total mass of the paper material.

The papermaking using a paper material can be carried out by a usual method. The papermaking may be carried out, for example, by a method in which a paper material is cast on a wire cloth or the like, dehydrated to obtain a wet paper, a plurality of wet papers are layered, if necessary, and the resulting single-layer or multilayer wet paper is pressed, followed by drying. In the method described above, a single-ply paper is obtained in cases where a plurality of wet papers are not layered, and a multiply paper is obtained in cases where a plurality of wet papers are layered. At the time of layering a plurality of wet papers, an adhesive may be coated on the surface(s) (the surface(s) to be layered with another wet paper(s)) of the wet papers.

### <Barrier Layer>

The laminate includes a barrier layer. For example, the laminate preferably has a barrier layer at least on one surface of the paper substrate. The laminate may include one barrier layer, or two or more barrier layers, but preferably includes one (single) barrier layer, from the viewpoint of production cost. As described above, the barrier layer exhibits high water vapor barrier properties and gas barrier properties.

### (Polyurethane Resin)

The barrier layer contains a polyurethane resin. The polyurethane resin is not particularly limited as long as the polyurethane resin is a polymer having a urethane bond, and a known polyurethane resin can be used.

The polyurethane resin preferably includes at least one selected from the group consisting of a polyurethane containing a structural unit derived from metaxylylene diisocyanate, and hydroxypolyurethane, and more preferably includes hydroxypolyurethane, from the viewpoint of achieving both higher water vapor barrier properties and gas barrier properties. In general, polyurethane resins are obtained by the reaction of a polyisocyanate and a polyol having two or more hydroxy groups. The "polyurethane containing a structural unit derived from metaxylylene diisocyanate" refers to a polyurethane resin obtained by the above-described reaction using a part or all of metaxylylene diisocyanate as the polyisocyanate. Further, the "hydroxypolyurethane" refers to a polyurethane resin having a hydroxyl group.

The hydroxypolyurethane preferably has a hydroxyl value of from 100 to 500 mg KOH/g, more preferably from 150 to 400 mg KOH/g, and still more preferably from 200 to 350 mg KOH/g. When the hydroxyl value of the hydroxypolyurethane is within the range described above, the cohesive force of the hydroxypolyurethane is increased, making it easier to achieve high barrier properties.

The hydroxypolyurethane may have an acid group. The hydroxypolyurethane preferably has an acid value of from 50 to 100 mg KOH/g, more preferably from 10 to 70 mg KOH/g, and still more preferably from 15 to 60 mg KOH/g.

The acid value and the hydroxyl value of the hydroxypolyurethane can be measured in accordance with JIS K 1557: 2007.

In cases where the polyurethane resin contains a structural unit derived from metaxylylene diisocyanate, the content of the structural unit derived from metaxylylene diisocyanate is preferably 50% by mole or more, with respect to the total amount of polyisocyanate-derived structural units. Such a polyurethane-based resin exhibits a high cohesive force due to hydrogen bonds and the stacking effect between xylylene groups, and thus is thought to have better gas barrier properties. The above-described content can be identified by a known analytical method such as ¹H-NMR.

The polyurethane resin preferably has a glass transition temperature of 50°C or higher, more preferably 65°C or higher, still more preferably 90°C or higher, and yet still more preferably 110°C or higher. The upper limit thereof is not particularly limited, and is, for example, 200°C or lower. The glass transition temperature of the polyurethane resin is a value measured in accordance with JIS K 7121:1987.

A commercially available product can be used as the hydroxypolyurethane. Examples of the commercially available product include HPU W-001, HPU W-003 and HPU W-013A (all of the above manufactured by Dainichiseika Color & Chemicals Mfg. Co., Ltd.). Further, examples of the polyurethane containing a structural unit derived from metaxylylene diisocyanate include TAKELAC WPB-341 (30) (manufactured by Mitsui Chemicals, Inc.).

The content of the polyurethane resin (preferably, hydroxypolyurethane) in the barrier layer is preferably from 30.0 to 80.0% by mass, more preferably from 40.0 to 75.0% by mass, still more preferably from 50.0 to 70.0% by mass, yet still more preferably from 55.0 to 68.0% by mass, and yet still more preferably from 60.0 to 66.0% by mass. When the content of the polyurethane resin is within the range described above, further increases in the water vapor barrier properties and the gas barrier properties are more easily achieved. In addition, when the content is within the range described above, the strength of the barrier layer is improved, and the heat sealability is improved in cases where the heat seal layer is provided on the barrier layer.

The barrier layer may further contain another resin(s), in addition to the polyurethane resin, to the extent that the above-described effects are not impaired. Examples of the other resin include, but not particularly limited thereto: polyolefin resins (such as polyethylene and polypropylene); vinyl chloride resins; styrene resins; styrene-butadiene copolymers; acrylonitrile-styrene copolymers; acrylonitrile/butadiene copolymers; ABS resins; AAS resins; AES resins; vinylidene chloride resins; poly-4-methylpentene-1 resins; polybutene-1 resins; vinylidene fluoride resins; vinyl fluoride resins; fluorine resins; polycarbonate resins; acetal resins; polyphenylene oxide resins; polyester resins; (such as polyethylene terephthalate and polybutylene terephthalate); polyphenylene sulfide resins; polyimide resins; polysulfone resins; polyethersulfone resins; aromatic polyester resins; polyarylate resins; olefin-unsaturated carboxylic acid copolymers; styrene-unsaturated carboxylic acid copolymers; acrylic resins; polyvinyl alcohol and modified resins thereof; polyacrylic acid and salts thereof; polysaccharide-based resins, such as cellulose derivatives and starch, and derivatives thereof; naturally-derived thermosetting resins, such as natural rubber and shellac, and modified products thereof. These resins may be used singly, or in combination of two or more kinds thereof.

### (Water-Suspendable Polymer, Water-Soluble Polymer)

It is preferred that the barrier layer further contain at least one selected from the group consisting of a water-suspendable polymer other than the polyurethane resin and a water-soluble polymer other than the polyurethane resin, in addition to the polyurethane resin, the flat inorganic compound and the cationic resin. The water-suspendable polymer and/or the water-soluble polymer can be selected from those described above as examples of other resins which can be used in the barrier layer.

The water-suspendable polymer other than the polyurethane resin preferably includes at least one selected from the group consisting of a styrene-butadiene-based copolymer, a styrene-acrylic copolymer, an olefin-unsaturated carboxylic acid-based copolymer, and a polyolefin resin. The water-suspendable polymers may be used singly, or in combination of two or more kinds thereof.

The water-soluble polymer other than the polyurethane resin may be, for example, a vinyl alcohol-based polymer, a polyalkyleneimine, a (meth)acrylic acid-based polymer, polyethylene glycol, polyacrylamide, a polycarboxylic acid, a water-soluble cellulose derivative or the like. However, the water-soluble polymer preferably includes at least one selected from the group consisting of a vinyl alcohol-based polymer and a (meth)acrylic acid-based polymer. The water-soluble polymers may be used singly, or in combination of two or more kinds thereof.

The examination by the present inventors revealed that three components, namely, the polyurethane resin, the flat inorganic compound and the cationic resin, have good barrier properties, but do not have sufficient performance from the viewpoint of the film-forming properties of the barrier layer. However, the present inventors then discovered that the combined use of the water-suspendable polymer and/or the water-soluble polymer, in addition to the three components, namely, the polyurethane resin, the flat inorganic compound and the cationic resin, improves the film-forming properties of the barrier layer, and as a result, further improves the water vapor barrier properties and the gas barrier properties. Hereinafter, the water-suspendable polymer and the water-soluble polymer other than the polyurethane resin are also collectively referred to as "film-forming aid".

In the case of forming the barrier layer by aqueous coating, the use of the water-soluble polymer provides a better effect of improving the film-forming properties as compared to using the water-suspendable polymer. Further, it is preferred to use the water-suspendable polymer in combination, in addition to the water-soluble polymer, from the viewpoint of improving the water resistance of the barrier layer, to achieve even better water vapor barrier properties. That is, the barrier layer preferably contains the water-suspendable polymer and the water-soluble polymer. At this time, the water-suspendable polymer is preferably an olefin-unsaturated carboxylic acid-based copolymer, and more preferably an ethylene-(meth)acrylic acid copolymer. Further, the water-soluble polymer is preferably a vinyl alcohol-based polymer. The combined use of the water-suspendable polymer and the water-soluble polymer described above enables to achieve both higher water vapor barrier properties and gas barrier properties.

The mass ratio (water-suspendable polymer: water-soluble polymer) of the water-suspendable polymer and the water-soluble polymer, in the barrier layer, is preferably from 20:1 to 1:2, more preferably from 10:1 to 2:3, still more preferably from preferably 5:1 to 3:4, and yet still more preferably from 4:1 to 4:5.

The barrier layer preferably contains the water-suspendable polymer and the water-soluble polymer. In this case, the barrier layer preferably contains the water-suspendable polymer and the water-soluble polymer, at least in any one of the following combinations (A) to (E):
(A) an ethylene-acrylic acid copolymer as the water-suspendable polymer, and polyvinyl alcohol as the water-soluble polymer;
(B) an ethylene-acrylic acid copolymer as the water-suspendable polymer, and polyacrylic acid as the water-soluble polymer;
(C) a styrene-acrylic copolymer as the water-suspendable polymer, and polyvinyl alcohol as the water-soluble polymer;
(D) a styrene-butadiene-based copolymer as the water-suspendable polymer, and polyvinyl alcohol as the water-soluble polymer; and
(E) a polyolefin resin as the water-suspendable polymer, and polyvinyl alcohol as the water-soluble polymer.

### (Water-Suspendable Polymer)

### << Styrene-Butadiene-based Copolymer >>

The styrene-butadiene-based copolymer is a copolymer obtained by the emulsion polymerization of: a styrene-based compound such as styrene, α-methylstyrene, vinyltoluene, p-t-butylstyrene or chlorostyrene; a butadiene-based compound such as 1,3-butadiene, isoprene (2-methyl-1,3-butadiene), 2,3-dimethyl-1,3-butadiene or 1,3-pentadiene; and a monomer(s) composed of another compound(s) copolymerizable with these compounds.

The styrene-based compound is preferably styrene, and the butadiene-based compound is preferably 1,3-butadiene.

A commercially available product can also be used as the styrene-butadiene-based copolymer. For example, LX407 S12 (manufactured by Zeon Japan Co., Ltd.) or the like can be used as an acid-modified styrene-butadiene copolymer binder.

### << Styrene-Acrylic Copolymer >>

The styrene-acrylic copolymer is a copolymer obtained by the emulsion polymerization of: a styrene-based compound such as styrene, α-methylstyrene, vinyltoluene, p-t-butylstyrene or chlorostyrene; an acrylic compound such as acrylic acid, methacrylic acid, a (meth)acrylic acid ester, (meth)acrylamidepropanesulfonic acid or a sodium salt of (meth)acrylic acid sulfoalkyl (in which the alkyl group has 2 or more and 3 or less carbon atoms); and a monomer(s) composed of another compound(s) copolymerizable with these compounds. The styrene-based compound is preferably styrene. The acrylic compound is preferably acrylic acid, methacrylic acid, an acrylic acid ester or a methacrylic acid ester, and more preferably acrylic acid or an acrylic acid ester. The (meth)acrylic acid ester is preferably an acrylic acid alkyl ester, in which the alkyl group preferably has from 1 to 6 carbon atoms.

A commercially available product can also be used as the styrene-acrylic copolymer. For example, JONCRYL HSL-9012 (manufactured by BASF SE) or the like can be used as a styrene-acrylic copolymer binder.

### << Olefin-Unsaturated Carboxylic Acid-based Copolymer >>

The olefin-unsaturated carboxylic acid-based copolymer is a copolymer obtained by the emulsion polymerization of: an olefin, in particular, an α-olefin such as propylene, or ethylene; an unsaturated carboxylic acid such as acrylic acid, methacrylic acid, crotonic acid, cinnamic acid, itaconic acid, fumaric acid, maleic acid or butene tricarboxylic acid; an unsaturated polycarboxylic acid alkyl ester having at least one carboxy group, such as itaconic acid monoethyl ester, fumaric acid monobutyl ester or maleic acid monobutyl ester; and a monomer(s) composed of another compound(s) copolymerizable with these compounds.

The olefin is preferably ethylene or an α-olefin, and more preferably ethylene. The unsaturated carboxylic acid monomer is preferably acrylic acid, methacrylic acid, itaconic acid, fumaric acid or the like.

The olefin-unsaturated carboxylic acid-based copolymer is preferably an ethylene-(meth)acrylic acid copolymer, and more preferably an ethylene-acrylic acid copolymer.

The olefin-unsaturated carboxylic acid-based copolymer may specifically be, for example, an aqueous dispersion of an ammonium salt of an ethylene-acrylic acid copolymer, which is commercially available under the name of ZAIKTHENE ((registered trademark) AC (copolymerization ratio of acrylic acid: 20%; manufactured by Sumitomo Seika Chemicals Co., Ltd.), or the like, and can be obtained easily and used.

### << Polyolefin Resin >>

The polyolefin resin is preferably of a homopolymer or copolymer of a monomer(s) selected from the group consisting of ethylene and an α-olefin, and more preferably polyethylene. A commercially available product can also be used as the polyolefin. For example, HYDRECT HS (manufactured by DIC Corporation) or the like can be used as a polyolefin resin binder.

### (Water-Soluble Polymer)

### << Vinyl Alcohol-based Polymer >>

The vinyl alcohol-based polymer may be, for example, polyvinyl alcohol. The polyvinyl alcohol preferably has a degree of saponification of from 85.0 to 99.5% by mole, and more preferably from 90.0 to 99.0% by mole. Further, an alkyl-modified polyvinyl alcohol such as an ethylene-modified polyvinyl alcohol is preferred. A commercially available product can also be used as the polyvinyl alcohol. For example, EXCEVAL series (manufactured by Kuraray Co., Ltd.) or the like can be used.

### << (Meth)acrylic Acid-based Polymer >>

The (meth)acrylic acid-based polymer may be, for example, polyacrylic acid, polymethacrylic acid, or a salt thereof. Examples of the salt include sodium poly(meth)acrylate and ammonium poly(meth)acrylate. A commercially available product can also be used as the (meth)acrylic acid-based polymer. For example, ARON A-30 (manufactured by Toagosei Co., Ltd.) or the like can be used as an aqueous solution of ammonium polyacrylate.

In addition, it is possible to use, as the water-soluble polymer, any known polymer such as polyethylene glycol, a water-soluble polyamide, polyacrylamide, a polycarboxylic acid, a water-soluble cellulose derivative or the like. Examples of the polycarboxylic acid include polymaleic acid, an acrylic acid-maleic acid copolymer and polyglucuronic acid. These polymers may be used singly, or in combination of two or more kinds thereof.

Examples of the water-soluble cellulose derivative include methylcellulose, hydroxymethylcellulose, hydroxyethylcellulose, carboxymethylcellulose, hydroxypropylcellulose, methylhydroxypropylcellulose and methylhydroxyethylcellulose.

The weight average molecular weight of the water-suspendable polymer and the water-soluble polymer is preferably 10,000 or more, and more preferably 20,000 or more, and at the same time, preferably 10,000,000 or less, and more preferably 5,000,000 or less. The weight average molecular weight of the water-suspendable polymer is measured by gel permeation chromatography (standard material: polystyrene). The weight average molecular weight of the water-soluble polymer is measured by gel permeation chromatography (standard material: polyethylene glycol).

The total content of the water-suspendable polymer other than the polyurethane resin and the water-soluble polymer other than the polyurethane resin, in the barrier layer, is preferably from 1.0 to 50.0% by mass, more preferably from 5.0 to 45.0% by mass, still more preferably from 10.0 to 35.0% by mass, and yet still more preferably from 13.0 to 25.0% by mass. When the total content of the polymers is within the range described above, further increases in the water vapor barrier properties and the gas barrier properties are more easily achieved, and the heat sealability is also further improved.

The content of the water-suspendable polymer other than the polyurethane resin, in the barrier layer, is preferably from 1.0 to 40.0% by mass, more preferably from 5.0 to 30.0% by mass, still more preferably from 8.0 to 20.0% by mass, and yet still more preferably from 10.0 to 15.0% by mass. When the content of the water-suspendable polymer is within the range described above, further increases in the water vapor barrier properties and the gas barrier properties are more easily achieved, and the heat sealability is also further improved.

The content of the water-soluble polymer other than the polyurethane resin, in the barrier layer, is preferably from 1.0 to 20.0% by mass, more preferably from 2.0 to 15.0% by mass, still more preferably from 2.0 to 10.0% by mass, yet still more preferably from 3.0 to 8.0% by mass, and yet still more preferably from 3.5 to 6.0% by mass. When the content of the water-soluble polymer is within the range described above, further increases in the water vapor barrier properties and the gas barrier properties (particularly, the oxygen barrier properties under high humidity conditions) are more easily achieved, and the heat sealability is also further improved.

The mass ratio (polyurethane resin: film-forming aid) of the polyurethane resin and the film-forming aid (the total of the water-suspendable polymer other than the polyurethane resin and the water-soluble polymer other than the polyurethane resin), in the barrier layer, is preferably from 50:50 to 95:5, more preferably from 55:45 to 90:10, still more preferably from 60:40 to 85:15, and yet still more preferably from 70:30 to 85:15, from the viewpoint of achieving both the barrier properties (particularly, the gas barrier properties) and the film-forming properties.

### (Flat Inorganic Compound)

The barrier layer contains a flat inorganic compound having an average thickness of 50 nm or less and an average aspect ratio of 200 or more, in order to facilitate increasing the water vapor barrier properties and the gas barrier properties. The flat inorganic compound is, for example, in the form of a flat plate.

When the flat inorganic compound is used in the barrier layer, particles of the flat inorganic compound are more easily laminated approximately in parallel with the plane (surface) of the paper substrate. As a result, the area in which the particles of the flat inorganic compound are absent decreases in the planar direction, making it easier to reduce the permeation of water vapor. In the thickness direction, the particles of the flat inorganic compound are present aligned in parallel with respect to the plane of the paper substrate, and thus, water vapor in the layer permeates through the layer while detouring the particles of the flat inorganic compound, thereby reducing the permeation of water vapor by the maze effect. This allows the barrier layer to more easily exhibit excellent water vapor barrier properties.

The flat inorganic compound preferably has an average thickness of 50 nm or less. The average thickness of the flat inorganic compound is preferably 30 nm or less, more preferably 20 nm or less, still more preferably 15 nm or less, and particularly preferably 10 nm or less. When the flat inorganic compound has a smaller thickness, the number of laminated layers of the particles of the flat inorganic compound in the barrier layer will increase, making it possible to achieve higher water vapor barrier properties. The lower limit value of the thickness of the flat inorganic compound is not particularly limited, but is preferably 0.5 nm or more, more preferably 1 nm or more, and still more preferably 2 nm or more.

The average thickness of the flat inorganic compound in a state contained in the barrier layer, as used herein, is determined as follows. An enlarged photograph of a cross section of the barrier layer is captured using an electron microscope. At this time, the magnification is set such that about 20 to 30 particles of the flat inorganic compound are included in the visual field. The thicknesses of individual particles of the flat inorganic compound in the visual field are measured. Then the arithmetic mean value of the thus obtained thicknesses is calculated, and the calculated value is defined as the average thickness of the flat inorganic compound.

The flat inorganic compound preferably has an average length of 0.2 µm or more and 100.0 µm or less. When the average length of the flat inorganic compound is 0.2 µm or more, the particles of the flat inorganic compound are more easily aligned in parallel with respect to the paper substrate. Further, when the average length is 100.0 µm or less, there is less risk that some of the particles of the flat inorganic compound protrude from the barrier layer. The average length of the flat inorganic compound is more preferably 30.0 µm or less, still more preferably 15.0 µm or less, and particularly preferably 10.0 µm or less. The lower limit of the average length is more preferably 0.2 µm or more, still more preferably 1.0 µm or more, and yet still more preferably 3.0 µm or more.

The average length of the flat inorganic compound in a state contained in the barrier layer, as used herein, is determined as follows. An enlarged photograph of a cross section of the barrier layer is captured using an electron microscope. At this time, the magnification is set such that about 20 to 30 particles of the flat inorganic compound are included in the visual field. The lengths (longer diameters) of individual particles of the flat inorganic compound in the visual field are measured. Then the arithmetic mean value of the thus obtained lengths is calculated, and the calculated value is defined as the average length of the flat inorganic compound. The length of the flat inorganic compound is sometimes also referred to as "particle size".

The flat inorganic compound has an average aspect ratio of 200 or more. When the average aspect ratio of the flat inorganic compound is 200 or more, a further increase in the water vapor barrier properties can be more easily achieved due to the maze effect. The average aspect ratio of the flat inorganic compound is preferably 280 or more, more preferably 300 or more, still more preferably 500 or more, and yet still more preferably 800 or more. A higher average aspect ratio leads to a more reduced permeation of water vapor, and thus, more improved water vapor barrier properties. In addition, a higher average aspect ratio enables to further reduce the amount of the flat inorganic compound to be added.

The upper limit of the average aspect ratio is not particularly limited. However, the upper limit is preferably about 10000 or less, more preferably about 5000 or less, still more preferably about 2000 or less, and yet still more preferably 1500 or less about, from the viewpoint of the viscosity of the coating liquid.

As described above, the average aspect ratio as used herein is a value obtained by capturing an enlarged photograph of a cross section of the barrier layer using an electron microscope, and dividing the resulting average length of the flat inorganic compound by the average thickness thereof.

Specific examples of the flat inorganic compound include: micas, including those belonging to the mica group and the brittle mica group, bentonites, kaolinite (kaolin mineral), pyrophyllite, talc, smectite, vermiculite, chlorite, septechlorite, serpentine, stilpnomelane and montmorillonite.

Among these, in particular, the barrier layer preferably contains one or more selected from micas and bentonites, and more preferably contains a mica or a bentonite, from the viewpoint of further improving the water vapor barrier properties and the gas barrier properties. Specific examples of micas include synthesized micas (such as swellable micas and non-swellable micas), muscovite, sericite, phlogopite, biotite, fluorine phlogopite (artificial mica), red mica, soda mica, vanadium mica, illite, tin mica, paragonite and brittle mica. Specific examples of bentonites include montmorillonite. These flat inorganic compounds may be used singly, or in combination of two or more kinds thereof.

The flat inorganic compound preferably includes a swellable layered silicate, such as a swellable mica. The barrier layer preferably contains hydroxypolyurethane and a swellable layered silicate. The swellable layered silicate is a layered inorganic compound which is swellable in water, and in which the layers easily cleave by shear and split into layers with a nanometer-order thickness. By combining hydroxypolyurethane and the swellable layered silicate, the particles of the swellable layered silicate having a small thickness and a high aspect ratio are dispersed, in a hydroxypolyurethane resin film which originally has a high water vapor barrier performance and gas barrier performance, allowing an even higher water vapor barrier performance and gas barrier performance to be achieved by the maze effect.

Examples of the swellable layered silicate include sodium tetrasilicic mica, sodium hectorite, lithium taeniolite, fluorine phlogopite, sodium smectite and sodium montmorillonite.

The swellable layered silicate is preferably a swellable mica such as sodium tetrasilicic mica. Among the commercially available products of the swellable layered silicate, example of the swellable mica include: NTS-10NC and NTO-05 (manufactured by Topy Industries, Ltd.); and SOMASIF ME300B-4T (manufactured by Katakura & Co-op Agri Corporation).

The content of the flat inorganic compound (preferably, the swellable layered silicate) in the barrier layer is preferably from 5.0 to 35.0% by mass, more preferably from 10.0 to 25.0% by mass, and still more preferably from 13.0 to 24.0% by mass. When the content of the flat inorganic compound is within the range described above, further increases in the water vapor barrier properties and the gas barrier properties are more easily achieved, and the heat sealability is also further improved.

### (Cationic Resin)

The barrier layer further contains a cationic resin, in addition to the polyurethane resin and the flat inorganic compound. The combined use of the flat inorganic compound and a cationic resin greatly improves the gas barrier properties and the water vapor barrier properties, particularly, the water vapor barrier properties.

The barrier layer preferably contains hydroxypolyurethane, a swellable layered silicate, and a cationic resin. This embodiment enables to achieve extremely-high water vapor barrier properties and gas barrier properties.

Since the surfaces of the particles of flat inorganic compound (particularly, the swellable layered silicate) are prone to be anionically charged and the ends of the particles thereof are prone to be cationically charged, the surfaces and the ends of the particles are prone to be drawn to each other to form a card-house aggregation structure. By adding a cationic resin, anionic groups on the particle surfaces can be capped with cations, enabling to destroy the card-house aggregation structure. Therefore, the three-dimensional aggregation of the particles of the swellable layered silicate can be reduced to allow the particles of the swellable layered silicate to be aligned in parallel with the plane of the paper substrate, making it possible for the maze effect to be sufficiently exhibited. As a result, extremely high gas barrier properties and water vapor barrier properties can be achieved.

Specific examples of the cationic resin include polyamide compounds, modified polyamide-based compounds, polyamine compounds, modified polyamine compounds, polyamide amine-epihalohydrin or formaldehyde condensation reaction products, polyamine-epihalohydrin or formaldehyde condensation reaction products, polyamide polyurea-epihalohydrin or formaldehyde condensation reaction products, polyamine polyurea-epihalohydrin or formaldehyde condensation reaction products, polyamideamine polyurea-epihalohydrin or formaldehyde condensation reaction products, polyamide polyurea compounds, polyamine polyurea compounds, polyamideamine polyurea compounds, polyamideamine compounds, polyvinyl pyridine, amino-modified acrylamide-based compounds, polyvinylamine and polydiallyldimethylammonium chloride. These cationic resins may be used singly, or in combination of two or more kinds thereof.

Among these, the cationic resin is preferably at least one selected from the group consisting of a modified polyamide compound and a modified polyamine compound, and more preferably at least one selected from the group consisting of a modified polyamide resin and a modified polyamine resin. A commercially available product can be used as the modified polyamide resin, and examples thereof include SPI203 (50) H, manufactured by Taoka Chemical Co., Ltd. Further, a commercially available product can be used as the modified polyamine resin, and examples thereof include SEIKOAT T-EF501, manufactured by SEIKO PMC Corporation.

The content of the cationic resin in the barrier layer can be selected as appropriate, depending on the types of the materials used for the barrier layer, such as hydroxypolyurethane and the swellable layered silicate. The content of the cationic resin in the barrier layer is preferably from 1.0 to 20.0% by mass, more preferably from 1.0 to 10.0% by mass, still more preferably from 1.5 to 8.0% by mass, yet still more preferably from 1.8 to 5.0% by mass, and particularly preferably from 2.0 to 3.0% by mass, from the viewpoint of further improving the barrier properties (particularly, the gas barrier properties), and from the viewpoint of the heat sealability.

The cationic resin preferably has a surface electric charge of from 0.1 to 10 meq/g, more preferably from 0.1 to 5.0 meq/g, still more preferably from 0.1 to 4.0 meq/g, yet still more preferably from 0.1 to 2.0 meq/g, and particularly preferably from 0.2 to 1.5 meq/g.

When the surface electric charge of the cationic resin is equal to or higher than the lower limit described above, the effect of adding the cationic resin can be more sufficiently obtained. When the surface electric charge is equal to or lower than the upper limit described above, on the other hand, the effect of the cationic resin can be more sufficiently obtained while reducing the aggregation of the particles of the swellable layered silicate.

The surface electric charge of the cationic resin is measured by the method described below. First, the polymer to be used as a sample is dissolved in water to obtain a solution with a polymer concentration of 1 ppm. To the resulting solution, 0.001 N sodium polyethylene sulfonate is added dropwise to measure the amount of electric charge, using a charge analyzer, Mutek Model PCD-04 (manufactured by BTG Inc.).

If necessary, it is possible to add to the barrier layer, a dispersant, a surfactant, an antifoaming agent, a wetting agent, a dye, a color adjuster, a thickener and/or the like, as appropriate, to the extent that the specific barrier properties described above are not impaired.

### (Coating Amount of Barrier Layer)

The coating amount of the barrier layer is not particularly limited, but the coating amount, in terms of solid content after drying, is preferably within the range of from 1 to 15 g/m², from the viewpoints of the barrier properties and the re-disintegration properties. The coating amount is more preferably 2 g/m² or more, and at the same time, more preferably 10 g/m² or less, still more preferably 8 g/m² or less, and yet still more preferably 6 g/m² or less.

The thickness of the barrier layer is preferably from 1 to 20 µm, and more preferably from 2 to 10 µm.

### (Method of Forming Barrier Layer)

The method of forming the barrier layer is not particularly limited. For example, at least one resin selected from the group consisting of a water-suspendable polymer and a water-soluble polymer other than the polyurethane resin, a polyurethane resin, a flat inorganic compound and a cationic resin are dispersed in a solvent, to prepare a barrier layer coating liquid. The barrier layer is preferably formed by coating the resulting barrier layer coating liquid on a paper substrate, followed by drying.

The solvent to be used for the barrier layer coating liquid is not particularly limited, and it is possible to use water, or an organic solvent such as ethanol, isopropyl alcohol, methyl ethyl ketone or toluene. Among these, an aqueous medium is preferred, and water is more preferred as a dispersion medium for the barrier layer coating liquid, from the viewpoint that the problems of volatile organic solvents can be avoided. In the present specification, the "aqueous medium" refers to a medium that contains 50% by mass or more of water.

The apparatus to be used for coating the barrier layer coating liquid is not particularly limited, and can be selected as appropriate from commonly used coating apparatuses, and used. Examples of the apparatus include various types of known coating apparatuses, such as an air knife coater, a blade coater, a gravure coater, a rod blade coater, a roll coater, a reverse roll coater, a Mayer bar coater, a curtain coater, a die slot coater, a champlex coater, a metering blade-type size press coater, a short dwell coater, a spray coater, a gate roll coater and a lip coater.

### <Sealant Layer>

The laminate having barrier properties further includes a sealant layer on the side of the paper substrate on which the barrier layer has been laminated. The sealant layer is a layer that melts by heat, an ultrasonic wave or the like, and adheres. The sealant layer preferably contains a water-dispersible resin. Examples of the water-dispersible resin include those described above as examples of the water-suspendable polymer other than the polyurethane resin. Preferred examples thereof include: acrylic resins such as polyolefin resins, styrene-acrylic copolymers and ethylene-(meth)acrylic acid copolymers; ethylene-vinyl acetate copolymers; polyester resins; rubber-based resins; urethane resins; and polyamide resins. These water-dispersible resins may be used singly, or in combination of two or more kinds thereof. In addition to these resins, a pigment such as silica or kaolin may also be added to the sealant layer, for the purpose of preventing blocking and improving oil resistance.

The content of the water-dispersible resin in the sealant layer is preferably from 70 to 99% by mass, more preferably from 80 to 98% by mass, and still more preferably from 92 to 98% by mass, from the viewpoint of the heat sealability.

The sealant layer is preferably a layer that contains at least one resin selected from the group consisting of a styrene-acrylic copolymer and a polyolefin resin. Any of those mentioned in the section of the (Water-Suspendable Polymer) described above can be used as the styrene-acrylic copolymer and the polyolefin resin. Examples of commercially available materials thereof include: aqueous dispersions of styrene-acrylic copolymers (product name: SEIKOAT RE-2016, and product name: XP8829, both manufactured by SEIKO PMC Corporation); and an aqueous dispersion of a polyolefin resin (product name: Rhobarr 320, manufactured by Dow Inc.).

In the laminate according to the present embodiment, the sealant layer contains a wax. The sealant layer exhibits extremely high water vapor barrier properties, due to the film-forming effect provided by the wax. The wax is not particularly limited, and a known wax can be used.

The wax preferably includes at least one selected from the group consisting of a hydrocarbon wax and an ester wax, from the viewpoint of achieving high barrier properties.

Examples of such waxes include: natural waxes such as waxes derived from animals and plants (such as beeswaxes, carnauba waxes and candelilla waxes), mineral waxes, and petroleum waxes (such as microcrystalline waxes); synthetic waxes such as polyolefin waxes, paraffin waxes and polyester waxes; and aliphatic ester waxes such as monoester waxes obtained from aliphatic monocarboxylic acids and aliphatic monoalcohols, diester waxes obtained from aliphatic monocarboxylic acids and aliphatic diols, and diester waxes obtained from aliphatic dicarboxylic acids and aliphatic monoalcohols. These waxes may be used singly, or in combination of two or more kinds thereof.

Among these, the sealant layer preferably contains at least one wax selected from the group consisting of a paraffin wax, a carnauba wax and a microcrystalline wax, from the viewpoint of further increasing the water vapor barrier properties. The carnauba wax can include, for example, an ester wax, a hydrocarbon or the like. The polyolefin wax, the paraffin wax, the microcrystalline wax or the like corresponds to a hydrocarbon wax.

Either a synthesized product or a commercially available product can be used as the carnauba wax. Examples of commercially available products of the carnauba wax include: Michem Lube-160RPH, manufactured by Michelman, Inc.; and CELOZOL 524, manufactured by Chukyo Yushi Co., Ltd.

Either a synthesized product or a commercially available product can be used as the paraffin wax. Examples of commercially available products of the paraffin wax include: AQUACER 497, manufactured by BYK-Chemie GmbH; and HYDRIN L-700, manufactured by Chukyo Yushi Co., Ltd.

Either a synthesized product or a commercially available product can be used as the microcrystalline wax. Examples of commercially available products of the microcrystalline wax include EMUSTAR-0001, manufactured by Nippon Seiro Co., Ltd.

Either a synthesized product or a commercially available product can be used as a polyethylene wax. Examples of commercially available products of the polyethylene wax include Aquacer 531, manufactured by BYK-Chemie GmbH.

The sealant layer preferably contains the water-dispersible resin and the wax. The content of the wax in the sealant layer is preferably from 1 to 35 parts by mass, more preferably from 2 to 20 parts by mass, still more preferably from 3 to 12 parts by mass, and yet still more preferably from 3 to 8 parts by mass, with respect to 100 parts by mass of the water-dispersible resin. When the content of the wax is within the range described above, both high water vapor barrier properties and gas barrier properties are more easily achieved, and the heat-seal strength can also be increased. The content of the wax in the sealant layer is preferably from 1 to 30% by mass, more preferably from 2 to 20% by mass, and still more preferably from 2 to 8% by mass, from the viewpoint of the heat sealability.

The sealant layer preferably contains the water-dispersible resin and the wax, at least in any one of the following combinations (A) to (D):
(A) a styrene-acrylic copolymer as the water-dispersible resin, and a paraffin wax as the wax;
(B) a styrene-acrylic copolymer as the water-dispersible resin, and a carnauba wax as the wax;
(C) a styrene-acrylic copolymer as the water-dispersible resin, and a microcrystalline wax as the wax; and
(D) a polyolefin resin as the water-dispersible resin, and a paraffin wax as the wax.

The sealant layer may further contain another component(s), in addition to the water-dispersible resin and the wax described above. Examples of the other component include pigments, dyes, crosslinking agents, coupling agents, surfactants and water-soluble polymers, and known compounds can be used.

### (Coating Amount of Sealant Layer)

The coating amount of the sealant layer is not particularly limited, but the coating amount, in terms of solid content after drying, is preferably within the range of from 1 to 15 g/m², from the viewpoints of the heat sealability and the re-disintegration properties. The coating amount is more preferably 2 g/m² or more, and at the same time, more preferably 10 g/m² or less, still more preferably8 g/m² or less, and yet still more preferably6 g/m² or less.

The thickness of the sealant layer is preferably from 0.5 to 20 µm, and more preferably from 1 to 10 µm.

### (Method of Forming Sealant Layer)

The method of forming the sealant layer is not particularly limited. For example, the sealant layer is preferably formed by dispersing a water-dispersible resin in a solvent to prepare a sealant layer coating liquid, and coating the resulting sealant layer coating liquid on the barrier layer, followed by drying.

The solvent to be used for the sealant layer coating liquid is not particularly limited, and it is possible to use water, or an organic solvent such as ethanol, isopropyl alcohol, methyl ethyl ketone, or toluene. Among these, an aqueous medium is preferred, and water is more preferred as a dispersion medium for the sealant layer coating liquid, from the viewpoint that the problems of volatile organic solvents can be avoided.

The total coating amount of the barrier layer and the sealant layer is preferably 12 g/m² or less, and more preferably 11 g/m² or less. The fact that the total coating amount of these layers is within the range described above means that extremely high gas barrier properties and water vapor barrier properties can be achieved even when the layers are thin. Further, when the total coating amount is within the range described above, the ratio of the paper substrate can be more easily increased, the weight of the resulting product can be further reduced, and the biodegradability thereof is further improved.

The lower limit of the above-described total coating amount is not particularly limited, but is preferably 2 g/m² or more, more preferably 5 g/m² or more, and still more preferably 8 g/m² or more.

Accordingly, the total coating amount of the barrier layer and the sealant layer is preferably from 2 to 12 g/m², and more preferably from 5 to 11 g/m².

When a sample obtained by heat sealing the sealant layers of the laminates under the conditions of 160°C, 0.2 MPa and 1 second, is subjected to peeling with a tensile tester, the measured heat-seal peeling strength of the sample is preferably 2.0 N/15 mm or more, more preferably 2.5 N/15 mm or more, still more preferably 2.8 N/15 mm or more, and yet still more preferably 3.0 N/15 mm or more. When the thus measured heat-seal strength is within the range described above, it is possible to prevent bag rupture during the transfer of the contents.

The upper limit of the heat-seal strength is not particularly limited, but is preferably 10.0 N/15 mm or less, 7.0 N/15 mm or less, 5.0 N/15 mm or less, or 4.0 N/15 mm or less.

Accordingly, the above-described heat-seal peeling strength is preferably from 2.0 to 10.0 N/15 mm.

### <Production of Laminate>

The method of producing the laminate is not particularly limited, and a known method can be used. The method of producing the laminate includes the step of coating a barrier layer coating liquid on a paper substrate, first, to form a barrier layer. The method of producing the laminate may further include the step of coating a sealant layer coating liquid on the surface of the paper substrate on which the barrier layer has been coated, to form a sealant layer. Details of the formation of the respective layers are as described above. The respective layers may be formed by sequentially coating the respective coating liquids, followed by drying, or alternatively, by simultaneous multilayer coating, followed by drying.

The drying equipment for drying each coated layer is not particularly limited, and known equipment can be used. The drying equipment may be, for example, a hot air dryer, an infrared dryer, a gas burner, a hot platen, or the like.

The laminate includes at least a paper substrate, a barrier layer and a sealant layer, in the order mentioned. The laminate having barrier properties may be a laminate consisting of a paper substrate, a single barrier layer and a sealant layer.

### (Other Layers)

The laminate according to the present embodiment may include a layer(s) other than the layers described above. If necessary, the laminate may include, for example, a pigment coating layer, an adhesive layer, a primer layer and/or the like. The laminate preferably does not include an inorganic material layer such as an aluminum vapor deposited layer, from the viewpoint of improving the biomass ratio.

### <Pigment Coating Layer>

In cases where the laminate according to the present embodiment has the barrier layer and the heat seal layer on one surface of the paper substrate, in the order mentioned, the laminate may have a pigment coating layer on the other surface of the paper substrate. By providing a pigment coating layer, it is possible to increase the smoothness of the surface provided with the layer, and also to reduce the frictional force of the surface against a packaging machine part, such as a sailor. As a result, a laminate having excellent printing suitability and package processing suitability can be obtained. The pigment coating layer preferably contains a pigment and a binder. From the viewpoint of obtaining the effects described above, the pigment coating layer is preferably subjected to a calendar treatment under arbitrary conditions.

The pigment to be contained in the pigment coating layer is not particularly limited. Examples of the pigment include: inorganic pigments such as kaolin, clay, engineered kaolin, delaminated clay, calcined clay, heavy calcium carbonate, light calcium carbonate, talc, titanium dioxide, barium sulfate, calcium sulfate, zinc oxide, silicic acid, a silicic acid salt, colloidal silica and satin white; and organic pigments including dense type, hollow type and core-shell type pigments. These pigments may be used singly, or in combination of two or more kinds thereof.

The content of the pigment in the pigment coating layer is not particularly limited, and is, for example, from 50 to 85% by mass.

The binder to be contained in the pigment coating layer is not particularly limited. Examples of the binder include styrene -butadiene-based resins; acrylic resins such as methyl (meth)acrylate copolymers and styrene-(meth)acrylic copolymers; olefin-unsaturated carboxylic acid-based copolymers such as ethylene-(meth)acrylic acid copolymers; natural polysaccharides such as dextrin, mannan, chitosan, arabinogalactan, glycogen, inulin, pectin, hyaluronic acid, hydroxyethylated starches, oxidized starches, etherified starches, phosphate esterified starches, enzyme-modified starches and modified starches obtained by flash drying these starches; oligomers thereof; and modified products thereof. These binders may be used singly, or in combination of two or more kinds thereof.

The content of the binder in the pigment coating layer is not particularly limited, and is, for example, from 5 to 50% by mass.

In addition to the pigment and the binder, the pigment coating layer may contain a component(s) such as an adhesive, a dispersant, a thickener, a water-retention agent, an antifoaming agent, a water-resistant agent, a colorant, a surfactant and/or the like.

The coating amount (in terms of solid content) of the pigment coating layer is not particularly limited, and is, for example, from 3 to 30 g/m². The method of forming the pigment coating layer is not particularly limited. However, the pigment coating layer is preferably formed by a method in which a dispersion liquid containing an inorganic pigment and a binder is coated on a paper substrate, followed by drying.

### (Barrier Properties of Laminate)

The laminate according to the present embodiment preferably has a water vapor permeability of a laminate having barrier properties, as measured in accordance with JIS-Z-0208: 1976 under the conditions of 40°C and 90% RH, of less than 50 g/m²·day. The water vapor permeability described above is more preferably 30 g/m²·day or less, still more preferably 20 g/m²·day or less, yet still more preferably 15 g/m²·day or less, yet still more preferably 10 g/m²·day or less, particularly preferably 8 g/m²·day or less, and extremely preferably 6 g/m²·day or less. The fact that the above-described water vapor permeability is within the range described above indicates that the laminate has extremely-high water vapor barrier properties.

The lower limit of the water vapor barrier properties is not particularly limited, because the lower the better. However, the lower limit is preferably 0 g/m²·day or more, 1 g/m²·day or more, or 2 g/m²·day or more. The water vapor permeability can be controlled, for example, by selecting the thickness of the barrier layer or the components contained in the barrier layer.

Accordingly, the above-described water vapor permeability is preferably 0 g/m²·day or more and less than 50 g/m²·day, and may be from 1 to 30 g/m²·day.

Further, the laminate preferably has an oxygen permeability at 23°C and 50% RH of 10.0 mL/m²·day·atm or less. The oxygen permeability described above is preferably 8.0 mL/m²·day·atm or less, more preferably 5.0 mL/m²·day·atm or less, still more preferably 3.0 mL/m²·day·atm or less, yet still more preferably 2.0 mL/m²·day·atm or less, yet still more preferably 1.5 mL/m²·day·atm or less, yet still more preferably 1.0 mL/m²·day·atm or less, and particularly preferably 0.6 mL/m²·day·atm or less. The fact that the above-described oxygen permeability is within the range described above indicates that the laminate has extremely-high oxygen barrier properties.

The lower limit of the oxygen permeability is not particularly limited, because the lower the better. However, the lower limit is preferably 0.0 mL/m²·day·atm or more, or 0.1 mL/m²·day·atm or more. The oxygen permeability can be controlled, for example, by selecting the thickness of the barrier layer or the components contained in the barrier layer.

Accordingly, the above-described oxygen permeability is preferably from 0.0 to 10.0 mL/m²·day·atm, and may be from 0.1 to 8.0 mL/m²·day·atm.

Further, the laminate preferably has an oxygen permeability at 23°C and 85% RH of 10.0 mL/m²·day·atm or less, more preferably 8.0 mL/m²·day·atm or less, still more preferably 5.0 mL/m²·day·atm or less, yet still more preferably 3.0 mL/m²·day·atm or less, yet still more preferably 2.0 mL/m²·day·atm or less, yet still more preferably 1.5 mL/m²·day·atm or less, and particularly preferably 1.0 mL/m²·day·atm or less.

The lower limit of the above-described oxygen permeability is not particularly limited, because the lower the better. However, the lower limit is preferably 0.0 mL/m²·day·atm or more, or 0.1 mL/m²·day·atm or more.

Accordingly, the above-described oxygen permeability is preferably from 0.0 to 10.0 mL/m²·day·atm, and may be from 0.1 to 8.0 mL/m²·day·atm.

The fact that the oxygen permeability at 85% RH satisfies the range described above indicates that sufficient gas barrier properties can be obtained even in a high humidity environment. The oxygen permeability at 85% RH can be adjusted within the range described above, by selecting the materials used for the barrier layer.

### (Ratio of Weight of Paper Substrate)

In the laminate according to the present embodiment, the ratio of the weight of the paper substrate is a value obtained by calculating the percentage of the weight of the paper substrate with respect to the total weight of the laminate, as follows. (Ratio of weight of paper substrate) = (weight of paper substrate) / (weight of laminate) × 100

The ratio of the weight of the paper substrate is preferably 75% or more, more preferably 80% or more, and still more preferably 82% or more. When the ratio of the weight of the paper substrate is equal to or higher than the lower limit described above, it is possible to provide a laminate with a high biomass ratio and a reduced environmental burden. The upper limit of the above-described ratio is not particularly limited, but is usually 99% or less, and preferably 95% or less. Accordingly, the ratio of the weight of the paper substrate is preferably from 75 to 99%.

Since the laminate has extremely-high water vapor barrier properties and gas barrier properties, the laminate can be suitably used as a paper product. The paper product may be, for example, a packaging bag, a paper container, a paper cup or the like. Further, the laminate can be suitably used as a paper product such as a packaging material for packaging food, a cosmetic, a daily commodity, a medical supply, an electronic component or the like. The laminate can be suitably used also as a paper product such as a packaging material for packaging contents with a scent or odor. It is also possible to suitably use the laminate as a paper product such as a packaging material for packaging food, a cosmetic, a daily commodity, a medical supply, an electronic component or the like which is exposed to high humidity conditions. The laminate may be a laminate having barrier properties.

The packaging bag can be obtained by folding the laminate having barrier properties according to the present embodiment, or layering two pieces of the laminates, so that the folded surface of the heat seal layer, or the two heat seal layers, face each other, and heat-sealing the peripheries of the edges thereof. The packaging bag may be, for example, a standing pouch-type bag, a side sealed bag, a two-side sealed bag, a three-side sealed bag, four-side sealed bag, a sealed bag formed by envelope sealing, a sealed bag formed by pillow sealing, a foldable sealed bag, a flat-bottomed sealed bag, a rectangular-bottomed sealed bag, a sealed bag with gusset folds.

### EXAMPLES

Examples will be given below in order to specifically describe the present invention. However, the present invention is in no way limited to these Examples. The following operations are carried out under the conditions of a temperature of 25°C and a relative humidity of 50% RH, unless otherwise specified. The term "part(s)" and the symbol "%" in Examples and Comparative Examples refer to "part(s) by mass" and "% by mass", respectively, unless otherwise specified.

### Example 1

To 33.3 parts of an aqueous dispersion of a flat inorganic compound (a swellable mica, average thickness: 5 nm, average length (longer diameter): 6.3 µm, average aspect ratio: 1260, solid concentration: 6% by mass, product name: NTS-10NC, manufactured by Topy Industries, Ltd.), 5.1 parts of a self-emulsifying emulsion of an ethylene-acrylic acid copolymer (solid concentration: 29.2% by mass, product name: ZAIKTHENE AC, manufactured by Sumitomo Seika Chemicals Co., Ltd.) was added with stirring. Further, 26.7 parts of a self-emulsifying aqueous emulsion of hydroxypolyurethane (solid concentration: 30% by mass, product name: HPU-WO13A, manufactured by Dainichiseika Color & Chemicals Mfg. Co., Ltd.; hydroxyl value: 235 mg KOH/g, acid value: 30 mg KOH/g, glass transition temperature: 70°C) was further added, followed by stirring.

To the resulting mixture, 0.57 parts of a modified polyamide-based resin (surface electric charge: 0.4 meq/g, solid concentration: 53% by mass, product name: SPI203 (50) H, manufactured by Taoka Chemical Co., Ltd.) was added, followed by stirring. Thereafter, 5.0 parts of an aqueous solution obtained by dissolving an ethylene-modified polyvinyl alcohol (product name: EXCEVAL RS-1717, manufactured by Kuraray Co., Ltd.), as a water-soluble polymer, in water to a solid concentration of 10% by mass, was further added. To the resulting mixture, 0.30 parts of a 25% by mass aqueous ammonia solution was further added, followed by stirring. Further, dilution water was added to a solid concentration of 19% by mass, to prepare a barrier layer coating material.

Three parts of a paraffin wax emulsion (solid concentration: 50% by mass, product name: AQUACER 497, manufactured by BYK-Chemie GmbH) was added to 90.9 parts of an aqueous dispersion of a styrene-acrylic copolymer (solid concentration: 33% by mass, product name: SEIKOAT RE-2016, manufactured by SEIKO PMC Corporation), and diluted with water to a solid concentration of 22% by mass, to prepare a sealant layer coating material.

The barrier layer coating material prepared above was coated on one surface of a paper substrate having a basis weight of 50 g/m² (one side-glazed bleached, manufactured by Oji F-Tex Co., Ltd.), such that the solid content was 5 g/m², and dried by air blowing at 120°C for 1 minute. On top of the resulting barrier layer, the sealant layer coating material was further coated such that the solid content was 5 g/m², and then dried by air blowing at 120°C for 1 minute, to obtain a heat-sealable laminate.

### Example 2

A heat-sealable laminate was obtained in the same manner as in Example 1, except that 13.7 parts of the self-emulsifying emulsion of an ethylene-acrylic acid copolymer and 20.0 parts of the self-emulsifying aqueous emulsion of hydroxypolyurethane were used, in the barrier layer coating material.

### Example 3

A heat-sealable laminate was obtained in the same manner as in Example 1, except that 50 parts of the swellable mica was used, in the barrier layer coating material.

### Example 4

A heat-sealable laminate was obtained in the same manner as in Example 1, except that an unbleached kraft paper having a basis weight of 70 g/m² (unbleached light-weight packaging paper, manufactured by Oji Materia Co., Ltd.) was used, as the paper substrate.

### Example 5

A heat-sealable laminate was obtained in the same manner as in Example 1, except that 1.89 parts of the cationic resin was used, in the barrier layer coating material.

### Example 6

A heat-sealable laminate was obtained in the same manner as in Example 1, except that 0.60 parts of a modified polyamine-based resin (surface electric charge: 1.3 meq/g, solid concentration: 50% by mass, product name: SEIKOAT T-EF501, manufactured by SEIKO PMC Corporation) was used, as the cationic resin in the barrier layer coating material.

### Example 7

A heat-sealable laminate was obtained in the same manner as in Example 1, except that 3.8 parts of a styrene-acrylic copolymer binder (solid concentration: 39% by mass, product name: JONCRYL HSL-9012, manufactured by BASF SE) was used, instead of the self-emulsifying emulsion of an ethylene-acrylic acid copolymer.

### Example 8

A heat-sealable laminate was obtained in the same manner as in Example 1, except that 3.3 parts of an acid- modified styrene-butadiene copolymer (SBR) binder (solid concentration: 46% by mass, product name: LX407 S12, manufactured by Zeon Japan Co., Ltd.) was used, instead of the self-emulsifying emulsion of an ethylene-acrylic acid copolymer.

### Example 9

A heat-sealable laminate was obtained in the same manner as in Example 1, except that 6.5 parts of a polyolefin resin binder (solid concentration: 23% by mass, product name: HYDRECT HS, manufactured by DIC Corporation) was used, instead of the self-emulsifying emulsion of an ethylene-acrylic acid copolymer.

### Example 10

A heat-sealable laminate was obtained in the same manner as in Example 1, except that 10.0 parts of an aqueous solution obtained by dissolving the ethylene-modified polyvinyl alcohol in water to a solid concentration of 10% by mass, was added.

### Example 11

A heat-sealable laminate was obtained in the same manner as in Example 1, except that 10.0 parts of an aqueous solution obtained by adjusting an aqueous solution of ammonium polyacrylate (solid concentration: 30% by mass, product name: ARON A-30, manufactured by Toagosei Co., Ltd.) to a solid concentration of 5% by mass, was used, instead of the ethylene-modified polyvinyl alcohol.

### Example 12

A heat-sealable laminate was obtained in the same manner as in Example 1, except that 73.2 parts of an aqueous dispersion of a polyolefin (solid concentration: 43% by mass, product name: Rhobarr 320, manufactured by Dow Inc.) was used, instead of the aqueous dispersion of a styrene-acrylic copolymer in the sealant layer coating material.

### Example 13

A heat-sealable laminate was obtained in the same manner as in Example 1, except that 1.8 parts of the paraffin wax emulsion was used.

### Example 14

A heat-sealable laminate was obtained in the same manner as in Example 1, except that 6.0 parts of the paraffin wax emulsion was used.

### Example 15

A heat-sealable laminate was obtained in the same manner as in Example 1, except that 6.0 parts of a carnauba wax (solid concentration: 25% by mass, product name: Lube-160RPH, manufactured by Michelman, Inc.) was used, instead of the paraffin wax emulsion.

### Example 16

A heat-sealable laminate was obtained in the same manner as in Example 1, except that a bentonite (sodium montmorillonite) (average thickness: 1 nm, average length (longer diameter): 0.3 µm, average aspect ratio: 300, product name: KUNIPIA G, Manufactured by Kunimine Industries Co., Ltd.) was used as the flat inorganic compound, instead of the swellable mica, to prepare an aqueous dispersion having a solid concentration of 10% by mass, and 20.0 parts of the resulting aqueous dispersion was added.

### Example 17

A heat-sealable laminate was obtained in the same manner as in Example 1, except that 100 parts of the swellable mica and 5.7 parts of the cationic resin were used, in the barrier layer coating material.

### Example 18

A heat-sealable laminate was obtained in the same manner as in Example 1, except that 18.0 parts of the paraffin wax was used, in the sealant layer coating material.

### Example 19

A heat-sealable laminate was obtained in the same manner as in Example 1, except that 3.8 parts of a microcrystalline wax (solid concentration: 40% by mass, product name: EMUSTAR-0001, manufactured by Nippon Seiro Co., Ltd.) was used, instead of the paraffin wax emulsion.

### Example 20

A heat-sealable laminate was obtained in the same manner as in Example 1, except that a dispersion of a polyurethane containing a structural unit derived from metaxylylene diisocyanate (solid concentration: 30% by mass, product name: TAKELAC WPB-341 (30), manufactured by Mitsui Chemicals, Inc.) was used, instead of the self-emulsifying aqueous emulsion of hydroxypolyurethane (solid concentration: 30% by mass, product name: HPU-WO13A, manufactured by Dainichiseika Color & Chemicals Mfg. Co., Ltd.) in the barrier layer coating material. When the polyurethane resin described above was subjected to ¹H-NMR measurement, the content of the structural unit derived from metaxylylene diisocyanate with respect to the total amount of polyisocyanate-derived structural units was 50% by mole or more. Further, the polyurethane resin had a glass transition temperature of 130°C.

### Comparative Example 1

A heat-sealable laminate was obtained in the same manner as in Example 1, except that 32.5 parts of the self-emulsifying emulsion of an ethylene-acrylic acid copolymer and 0 parts of the self-emulsifying aqueous emulsion of hydroxypolyurethane were used, in the barrier layer coating material.

### Comparative Example 2

A heat-sealable laminate was obtained in the same manner as in Example 1, except that 0 parts of the swellable mica was used, in the barrier layer coating material.

### Comparative Example 3

A heat-sealable laminate was obtained in the same manner as in Example 1, except that 0 parts of the cationic resin was used, in the barrier layer coating material.

### Comparative Example 4

A heat-sealable laminate was obtained in the same manner as in Example 1, except that 0 parts of the paraffin wax was used, in the sealant layer coating material.

### Comparative Example 5

A heat-sealable laminate was obtained in the same manner as in Example 1, except that an engineered kaolin (average thickness: 100 nm, average length: 9 µm, average aspect ratio: 90, product name: BARRISURF HX, manufactured by Imerys S.A.) was used as the flat inorganic compound, instead of the swellable mica, to prepare an aqueous dispersion having a solid concentration of 50% by mass, and 4.0 parts of the resulting aqueous dispersion was added.

### Comparative Example 6

To 47.3 parts of an aqueous dispersion of a layered inorganic compound (swellable mica, NTO-05), 90.0 parts of an acid-modified SBR latex (LX407 S12) as an anionic binder and 9.4 parts of an acid-modified SBR latex (LX407 BP-6) were added with stirring, followed by further starring. To the resulting mixture, 4.5 parts of a modified polyamide-based resin (SPI203 (50)) as a cationic resin was added, followed by stirring. Thereafter, 0.6 parts of a 25% aqueous ammonia solution was further added, followed by stirring. Further, dilution water was added to a solid concentration of 32%, to prepare a coating liquid for a water vapor barrier layer.

An aqueous solution having a solid concentration of 10%, of polyvinyl alcohol (PVA, Poval PVA 117) as a water-soluble polymer, was prepared, as a coating liquid for a gas barrier layer.

The above-prepared coating liquid for a water vapor barrier layer was coated on one surface of a one side-glazed bleached kraft paper with a Mayer bar, such that the coating amount of water vapor barrier layer after drying was 13 g/m², and then dried at 120°C for 1 minute in a hot air dryer, to form a water vapor barrier layer.

On top of the water vapor barrier layer, the coating liquid for a gas barrier layer was further coated with a Mayer bar, such that the coating amount of gas barrier layer after drying was 2.0 g/m², and then dried at 120°C for 1 minute in a hot air dryer, to form a gas barrier layer.

Further, an aqueous heat-sealing agent (CHEMIPEARL S-300, manufactured by Mitsui Chemicals, Inc.) was coated on the surface of the thus formed oxygen barrier layer, such that the solid content was 5 g/m², to form a sealant layer (thickness: 5 µm), thereby obtaining a laminate having gas barrier properties.

The following evaluations were carried out for the thus obtained laminates of Examples 1 to 18 and Comparative Examples 1 to 6. The results are shown in Tables 1 to 3.

### [Oxygen Permeability]

The oxygen permeability of each laminate was measured under the conditions of a temperature of 23°C and a relative humidity of 50%, using an apparatus for measuring oxygen permeability (OX-TRAN 2/22, Manufactured by MOCON Inc.). Specifically, an isocyanate-based adhesive (obtained by mixing one part of DICDRY KW-75 with 10 parts of DICDRY LX-500, both manufactured by DIC Corporation) was coated at 5 g/m², on the surface of the sealant layer of each of the laminates obtained in the Examples and Comparative Examples, and then a CPP film having a thickness of 20 µm (GP-32, manufactured by Hokuetsu Kasei Co., Ltd.) was laminated thereon, to form each laminated sheet.

The oxygen permeability at a temperature of 23°C and a relative humidity of 50%, or at a temperature of 23°C and a relative humidity of 85%, was measured in accordance with JIS K 7126-2: 2006, for each laminated sheet. A lower value of the oxygen permeability indicates better oxygen barrier properties. It is noted here that the CPP film is laminated in order to facilitate the measurement of the oxygen permeability without being affected by the irregularities of the laminate, and that the CPP film does not have any impact on the oxygen permeability.

### [Water Vapor Permeability]

The water vapor permeability of each laminate was measured in accordance with Method B (cup method) (temperature: 40°C ± 0.5°C, relative humidity: 90% ± 2%) described in JIS-Z-0208: 1976, with the sealant layer arranged facing the inner side.

### [Ratio of Weight of Paper Substrate]

The ratio of the weight of the paper substrate in each laminate was determined by calculating the percentage of the weight of the paper substrate with respect to the total weight of the laminate, as follows. (Ratio of weight of paper substrate) = (weight of paper substrate) / (weight of laminate) × 100

### [Measurement of Heat-seal Peeling Strength]

Two laminates, as one set, were layered such that the coated layers thereof face each other, and heat-sealed under the conditions of 160°C, 0.2 MPa and 1 second, using a heat seal tester (TP-701-B, manufactured by Tester Sangyo Co., Ltd.). The heat-sealed test piece was left to stand in a room controlled to a temperature of 23°C ± 1°C and a humidity of 50% ± 2%, for 4 hours or more. Subsequently, the heat-sealed test piece was cut into a width of 15 mm, subjected to T-shape peeling at a tensile speed of 300 mm/min, using a tensile tester, and the maximum load recorded was defined as the heat-seal peeling strength (N/15 mm).

The compositions of the barrier layer and the sealant layer in each laminate shown in Tables 1 to 3 indicate the solid contents of the respective components in parts by mass. "A" indicates that a one side-glazed bleached paper substrate having a basis weight of 50 g/m² was used, and "B" indicates that an unbleached kraft paper having a basis weight of 70 g/m² was used, as a base paper.

**[Table 1]**

| Example No. | | | | 1 | 2 | 3 | 4 | 5 | 6 | 7 | 8 | 9 | 10 |
|---|---|---|---|---|---|---|---|---|---|---|---|---|---|
| Base paper | | | | A | A | A | B | A | A | A | A | A | A |
| Barrier layer | Polyurethane resin | Hydroxypolyurethane | HPU-W013 | 80 | 60 | 80 | 80 | 80 | 80 | 80 | 80 | 80 | 80 |
| | Flat inorganic compound | Swellable mica | NTS-10NC | 20 | 20 | 30 | 20 | 20 | 20 | 20 | 20 | 20 | 20 |
| | | Bentonite | KUNIPIA G | | | | | | | | | | |
| | | Kaolin | BARRISURF HX | | | | | | | | | | |
| | Cationic resin | Modified polyamide | SPI203 | 3 | 3 | 3 | 3 | 10 | | 3 | 3 | 3 | 3 |
| | | Modified polyamine | T-EF501 | | | | | | 3 | | | | |
| | Water-suspendable polymer | Ethylene-acrylic acid | ZAIKTHENE AC | 15 | 40 | 15 | 15 | 15 | 15 | | | | 15 |
| | | Styrene-acrylic | HSL-9012 | | | | | | | 15 | | | |
| | | SBR | LX407S12 | | | | | | | | 15 | | |
| | | Polyolefin | HYDRECT HS | | | | | | | | | 15 | |
| | Water-soluble polymer | PVA | RS-1717 | 5 | 5 | 5 | 5 | 5 | 5 | 5 | 5 | 5 | 10 |
| | | Polyacrylic acid | ARON A-30 | | | | | | | | | | |
| Sealant layer | Water-dispersible resin | Styrene-acrylic | RE-2016 | 100 | 100 | 100 | 100 | 100 | 100 | 100 | 100 | 100 | 100 |
| | | Olefin | Rhobarr320 | | | | | | | | | | |
| | Wax | Paraffin | AQUACER497 | 5 | 5 | 5 | 5 | 5 | 5 | 5 | 5 | 5 | 5 |
| | | Carnauba | ML160RPH | | | | | | | | | | |
| | | Microcrystalline | EMUSTAR-0001 | | | | | | | | | | |
| Evaluation | Oxygen permeability mL/m²/day/atm | 23°C, 50%RH | | 0.5 | 1.0 | 0.3 | 1.0 | 0.5 | 0.5 | 0.8 | 1.0 | 0.9 | 0.2 |
| | | 23°C, 85 %RH | | 0.7 | 1.2 | 0.5 | 1.3 | 2.1 | 0.7 | 1.1 | 1.5 | 1.3 | 1.9 |
| | Water vapor permeability g/m²/day | 40°C, 90 %RH | | 3 | 3 | 3 | 5 | 6 | 3 | 5 | 5 | 5 | 6 |
| | Ratio of paper substrate %by weight | | | 83 | 83 | 83 | 88 | 83 | 83 | 83 | 83 | 83 | 83 |
| | Heat-seal strength N/15mm | | | 3.1 | 2.7 | 2.9 | 4.5 | 3.1 | 3.1 | 3.3 | 3.1 | 3.2 | 3.3 |
| Content ratio in barrier layer | Polyurethane resin | | %by mass | 65.0 | 46.9 | 60.2 | 65.0 | 61.5 | 65.0 | 65.0 | 65.0 | 65.0 | 62.5 |
| | Flat inorganic compound | | %by mass | 16.3 | 15.6 | 22.6 | 16.3 | 15.4 | 16.3 | 16.3 | 16.3 | 16.3 | 15.6 |
| | Cationic resin | | %by mass | 2.4 | 2.3 | 2.3 | 2.4 | 7.7 | 2.4 | 2.4 | 2.4 | 2.4 | 2.3 |
| | Water-suspendable polymer + Water-soluble polymer | | %by mass | 16.3 | 35.2 | 15.0 | 16.3 | 15.4 | 16.3 | 16.3 | 16.3 | 16.3 | 19.5 |

**[Table 2]**

| Example No. | | | | 11 | 12 | 13 | 14 | 15 | 16 | 17 | 18 | 19 | 20 |
|---|---|---|---|---|---|---|---|---|---|---|---|---|---|
| Base paper | | | | A | A | A | A | A | A | A | A | A | A |
| Barrier layer | Polyurethane resin | Hydroxypolyurethane | HPU-W013 | 80 | 80 | 80 | 80 | 80 | 80 | 80 | 80 | 80 | |
| | | TAKELAC WPB-341(30) | | | | | | | | | | | 80 |
| | Flat inorganic compound | Swellable mica | NTS-10NC | 20 | 20 | 20 | 20 | 20 | | 60 | 20 | 20 | 20 |
| | | Bentonite | KUNIPIA G | | | | | | 20 | | | | |
| | | Kaolin | BARRISURF HX | | | | | | | | | | |
| | Cationic resin | Modified polyamide | SPI203 | 3 | 3 | 3 | 3 | 3 | 3 | 30 | 3 | 3 | 3 |
| | | Modified polyamine | T-EF501 | | | | | | | | | | |
| | Water-suspendable polymer | Ethylene-acrylic acid | ZAIKTHENE AC | 15 | 15 | 15 | 15 | 15 | 15 | 15 | 15 | 15 | 15 |
| | | Styrene-acrylic | HSL-9012 | | | | | | | | | | |
| | | SBR | LX407S12 | | | | | | | | | | |
| | | Polyolefin | HYDRECT HS | | | | | | | | | | |
| | Water-soluble polymer | PVA | RS-1717 | | 5 | 5 | 5 | 5 | 5 | 5 | 5 | 5 | 5 |
| | | Polyacrylic acid | ARON A-30 | 5 | | | | | | | | | |
| Sealant layer | Water-dispersible resin | Styrene-acrylic | RE-2016 | 100 | | 100 | 100 | 100 | 100 | 100 | 100 | 100 | 100 |
| | | Olefin | Rhobarr320 | | 100 | | | | | | | | |
| | Wax | Paraffin | AQUACER497 | 5 | 5 | 3 | 10 | | 5 | 5 | 30 | | 5 |
| | | Carnauba | ML160RPH | | | | | 5 | | | | | |
| | | Microcrystalline | EMUSTAR-0001 | | | | | | | | | 5 | |
| Evaluation | Oxygen permeability mL/m²/day/atm | 23°C, **50%RH** | | 0.5 | 0.7 | 0.5 | 0.5 | 0.5 | 1.0 | 0.3 | 0.5 | 0.5 | 0.4 |
| | | 23°C, 85 %RH | | 0.7 | 0.9 | 0.7 | 0.7 | 0.7 | 2.2 | 0.5 | 0.9 | 0.7 | 0.6 |
| | Water vapor permeability g/m²/day | 40°C, 90 %RH | | 3 | 4 | 5 | 2 | 3 | 5 | 3 | 3 | 4 | 8 |
| | Ratio of paper substrate % by weight | | | 83 | 83 | 83 | 83 | 83 | 83 | 83 | 83 | 83 | 83 |
| | Heat-seal strength N/15mm | | | 3.1 | 3.5 | 3.3 | 2.5 | 3.1 | 3.1 | 0.6 | 0.9 | 3.3 | 3.0 |
| Content ratio in barrier layer | Polyurethane resin | | %by mass | 65.0 | 65.0 | 65.0 | 65.0 | 65.0 | 65.0 | 42.1 | 65.0 | 65.0 | 65.0 |
| | Flat inorganic compound | | %by mass | 16.3 | 16.3 | 16.3 | 16.3 | 16.3 | 16.3 | 31.6 | 16.3 | 16.3 | 16.3 |
| | Cationic resin | | %by mass | 2.4 | 2.4 | 2.4 | 2.4 | 2.4 | 2.4 | 15.8 | 2.4 | 2.4 | 2.4 |
| | Water-suspendable polymer + Water-soluble polymer | | % by mass | 16.3 | 16.3 | 16.3 | 16.3 | 16.3 | 16.3 | 10.5 | 16.3 | 16.3 | 16.3 |

**[Table 3]**

| Example No. | | | | Comparative 1 | Comparative 2 | Comparative 3 | Comparative 4 | Comparative 5 | Comparative 6 |
|---|---|---|---|---|---|---|---|---|---|
| Base paper | | | | A | A | A | A | A | A |
| Barrier layer | Polyurethane resin | Hydroxypolyurethane | HPU-WO13 | 0 | 80 | 80 | 80 | 80 | Described in the specification |
| | Flat inorganic compound | Swellable mica | NTS-10NC | 20 | 0 | 20 | 20 | | |
| | | Bentonite | KUNIPIA G | | | | | | |
| | | Kaolin | BARRISURF HX | | | | | 20 | |
| | Cationic resin | Modified polyamide | SPI203 | 3 | 3 | 0 | 3 | 3 | |
| | | Modified polyamine | T-EF501 | | | | | | |
| | Water-suspendable polym er | Ethylene-acrylic acid | ZAIKTHENE AC | 95 | 15 | 15 | 15 | 15 | |
| | | Styrene-acrylic | HSL-9012 | | | | | | |
| | | SBR | LX407S12 | | | | | | |
| | | Polyolefin | HYDRECT HS | | | | | | |
| | Water-soluble polymer | PVA | RS-1717 | 5 | 5 | 5 | 5 | 5 | |
| | | Polyacrylic acid | ARON A-30 | | | | | | |
| Sealant layer | Water-dispersible resin | Styrene-acrylic | RE-2016 | 100 | 100 | 100 | 100 | 100 | |
| | | Olefin | Rhobarr320 | | | | | | |
| | Wax | Paraffin | AQUACER497 | 5 | 5 | 5 | 0 | 5 | |
| | | Carnauba | ML160RPH | | | | | | |
| | | Microcrystalline | EMUSTAR-0001 | | | | | | |
| Evaluation | Oxygen permeability mL/m²/day/atm | 23°C, 50%RH | | 60 | 250 | 0.5 | 0.5 | 50 | 0.8 |
| | | 23°C, 85 %RH | | 85 | 300 | 0.9 | 0.9 | 100 | 5 |
| | Water vapor permeability g/m²/day | 40°C, 90 %RH | | 5 | 200 | 50 | 10 | 100 | 5 |
| | Ratio of paper substrate % by weight | | | 83 | 83 | 83 | 83 | 83 | 71 |
| | Heat-seal strength N/15mm | | | 3.5 | 3.4 | 2.9 | 3.3 | 3.0 | 4.0 |
| Content ratio in barrier layer | Polyurethane resin | | % by mass | 0.0 | 77.7 | 66.7 | 65.0 | 65.0 | - |
| | Flat inorganic compound | | % by mass | 16.3 | 0.0 | 16.7 | 16.3 | 16.3 | - |
| | Cationic resin | | % by mass | 2.4 | 2.9 | 0.0 | 2.4 | 2.4 | - |
| | Water-suspendable polymer + Water-soluble polymer | | % by mass | 81.3 | 19.4 | 16.7 | 16.3 | 16.3 | - |

## Claims

1. A laminate comprising a paper substrate layer, a barrier layer and a sealant layer, in the order mentioned,
wherein the barrier layer comprises:
a polyurethane resin;
a flat inorganic compound having an average thickness of 50 nm or less and an average aspect ratio of 200 or more; and
a cationic resin, and
wherein the sealant layer comprises a wax.

2. The laminate according to claim 1, wherein the polyurethane resin comprises at least one selected from the group consisting of:
a polyurethane containing a structural unit derived from metaxylylene diisocyanate; and
hydroxypolyurethane.

3. The laminate according to claim 1 or 2, wherein the flat inorganic compound comprises a swellable layered silicate.

4. The laminate according to any one of claims 1 to 3, wherein the barrier layer comprises from 1.0 to 20.0% by mass of the cationic resin.

5. The laminate according to any one of claims 1 to 4, wherein the barrier layer comprises from 30.0 to 80.0% by mass of the polyurethane resin.

6. The laminate according to any one of claims 1 to 5, wherein the barrier layer comprises from 5.0 to 35.0% by mass of the flat inorganic compound.

7. The laminate according to any one of claims 1 to 6,
wherein the barrier layer further comprises at least one selected from the group consisting of a water-suspendable polymer other than the polyurethane resin and a water-soluble polymer other than the polyurethane resin,
wherein the water-suspendable polymer comprises at least one selected from the group consisting of a styrene-butadiene-based copolymer, a styrene-acrylic copolymer, an olefin-unsaturated carboxylic acid-based copolymer and a polyolefin resin, and
wherein the water-soluble polymer comprises at least one selected from the group consisting of a vinyl alcohol-based polymer and a (meth)acrylic acid-based polymer.

8. The laminate according to any one of claims 1 to 6,
wherein the barrier layer further comprises a water-suspendable polymer other than the polyurethane resin and a water-soluble polymer other than the polyurethane resin, and
wherein the barrier layer comprises the water-suspendable polymer and the water-soluble polymer, at least in any one of the following combinations (A) to (E):
(A) an ethylene-acrylic acid copolymer as the water-suspendable polymer, and polyvinyl alcohol as the water-soluble polymer;
(B) an ethylene-acrylic acid copolymer as the water-suspendable polymer, and polyacrylic acid as the water-soluble polymer;
(C) a styrene-acrylic copolymer as the water-suspendable polymer, and polyvinyl alcohol as the water-soluble polymer;
(D) a styrene-butadiene-based copolymer as the water-suspendable polymer, and polyvinyl alcohol as the water-soluble polymer; and
(E) a polyolefin resin as the water-suspendable polymer, and polyvinyl alcohol as the water-soluble polymer.

9. The laminate according to claim 7 or 8, wherein the barrier layer comprises a total of from 1.0 to 50.0% by mass of the water-suspendable polymer other than the polyurethane resin and the water-soluble polymer other than the polyurethane resin.

10. The laminate according to any one of claims 7 to 9, wherein the ratio (the mass of the polyurethane resin: the total mass of the water-suspendable polymer and the water-soluble polymer) of the mass of the polyurethane resin and the total mass of the water-suspendable polymer other than the polyurethane resin and the water-soluble polymer other than the polyurethane resin, in the barrier layer, is from 50:50 to 95:5.

11. The laminate according to any one of claims 1 to 10, wherein the sealant layer comprises a water-dispersible resin.

12. The laminate according to any one of claims 1 to 11, wherein the wax comprises at least one selected from the group consisting of a hydrocarbon wax and an ester wax.

13. The laminate according to any one of claims 1 to 12, wherein the wax comprises at least one selected from the group consisting of a paraffin wax, a carnauba wax, and a microcrystalline wax.

14. The laminate according to any one of claims 1 to 13,
wherein the sealant layer comprises a water-dispersible resin, and
wherein the water-dispersible resin comprises at least one selected from the group consisting of a styrene-acrylic copolymer, and a polyolefin resin.

15. The laminate according to any one of claims 1 to 14,
wherein the sealant layer comprises a water-dispersible resin, and
wherein the sealant layer comprises the water-dispersible resin and the wax, at least in any one of the following combinations (A) to (D):
(A) a styrene-acrylic copolymer as the water-dispersible resin, and a paraffin wax as the wax;
(B) a styrene-acrylic copolymer as the water-dispersible resin, and a carnauba wax as the wax;
(C) a styrene-acrylic copolymer as the water-dispersible resin, and a microcrystalline wax as the wax; and
(D) a polyolefin resin as the water-dispersible resin, and a paraffin wax as the wax.

16. The laminate according to any one of claims 1 to 15,
wherein the sealant layer comprises a water-dispersible resin, and
wherein the content of the wax in the sealant layer is from 1 to 35 parts by mass with respect to 100 parts by mass of the water-dispersible resin.

17. The laminate according to any one of claims 1 to 16, wherein the content of the wax in the sealant layer is from 1 to 30% by mass.

18. A paper product using the laminate according to any one of claims 1 to 17.
